(19) **Europäisches Patentamt / European Patent Office / Office européen des brevets**

(11) **EP 4 343 319 B1**

(12) **EUROPEAN PATENT SPECIFICATION**

(45) Date of publication and mention of the grant of the patent:
**10.12.2025  Bulletin 2025/50**

(21) Application number: **22214840.5**

(22) Date of filing: **20.12.2022**

(51) International Patent Classification (IPC):
**G01N 29/12** (2006.01)

(52) Cooperative Patent Classification (CPC):
**G01N 29/343; G01N 29/07; G01N 29/11; G01N 29/12; G01N 29/348; G01N 29/4418; G01N 29/4472;** G01N 2291/02466; G01N 2291/048; G01N 2291/102

(54) **METHOD, DEVICE, AND SYSTEM FOR ULTRASONIC ESTIMATION OF PLANT-LEAF PHYSIOLOGICAL RESPONSE**

VERFAHREN, VORRICHTUNG UND SYSTEM ZUR ULTRASCHALLSCHÄTZUNG DER PHYSIOLOGISCHEN REAKTION EINES PFLANZENBLATTES

PROCÉDÉ, DISPOSITIF ET SYSTÈME D'ESTIMATION ULTRASONORE DE RÉPONSE PHYSIOLOGIQUE DE FEUILLE VÉGÉTALE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.09.2022  LT 2022539**

(43) Date of publication of application:
**27.03.2024  Bulletin 2024/13**

(73) Proprietors:
- **Kaunas University of Technology**
  **44249 Kaunas (LT)**
- **Spanish National Research Council (CSIC)**
  **28006 Madrid (ES)**

(72) Inventors:
- **Svilainis, Linas**
  **LT-49219 Kaunas (LT)**
- **Chaziachmetovas, Andrius**
  **LT-53451 Kaunas, Kacergine (LT)**
- **Aleksandrovas, Arturas**
  **LT-48246 Kaunas (LT)**
- **Nakutis, Zilvinas**
  **LT-44499 Kaunas (LT)**
- **Eidukynas, Valdas**
  **LT-47483 Kaunas (LT)**
- **Tervydis, Paulius**
  **LT-50237 Kaunas (LT)**
- **Alvarez-Arenas, Tomas**
  **28850 Madrid (ES)**

- **Fernandez-Caballero Farinas, Maria**
  **28036 Madrid (ES)**

(74) Representative: **Klimaitiene, Otilija**
**AAA Law**
**A. Gostauto 40B**
**03163 Vilnius (LT)**

(56) References cited:
- **DOMINGO SANCHO-KNAPIK ET AL: "Air-coupled ultrasonic resonant spectroscopy for the study of the relationship between plant leaves' elasticity and their water content", IEEE TRANSACTIONS ON ULTRASONICS, FERROELECTRICS, AND FREQUENCY CONTROL, IEEE, USA, vol. 59, no. 2, 1 February 2012 (2012-02-01), pages 319 - 325, XP011434051, ISSN: 0885-3010, DOI: 10.1109/TUFFC.2012.2194**
- **COLLAZOS-BURBANO DAVID ET AL: "Air-coupled ultrasound spectroscopy and its potential application in agro-industry", 2014 XIX SYMPOSIUM ON IMAGE, SIGNAL PROCESSING AND ARTIFICIAL VISION, IEEE, 17 September 2014 (2014-09-17), pages 1 - 5, XP032721624, DOI: 10.1109/STSIVA.2014.7010158**
- **SVILAINIS LINAS ET AL: "Air-Coupled Ultrasound Resonant Spectroscopy Sensitivity Study in Plant Leaf Measurements", 2021 IEEE SENSORS, IEEE, 31 October 2021 (2021-10-31), pages 1 - 4, XP034051996, DOI: 10.1109/SENSORS47087.2021.9639612**

- GÓMEZ ÁLVAREZ-ARENAS TOMAS ET AL: "Ultrasonic Sensing of Plant Water Needs for Agriculture", SENSORS, vol. 16, no. 7, 14 July 2016 (2016-07-14), pages 1 - 20, XP093027648, DOI: 10.3390/s16071089
- SVILAINIS LINAS ET AL: "Resource Tradeoff Analysis of Plant Physiological Status Sensor with Cloud Connectivity", 2021 11TH IEEE INTERNATIONAL CONFERENCE ON INTELLIGENT DATA ACQUISITION AND ADVANCED COMPUTING SYSTEMS: TECHNOLOGY AND APPLICATIONS (IDAACS), IEEE, vol. 1, 22 September 2021 (2021-09-22), pages 241 - 246, XP033996325, ISBN: 978-1-6654-4209-1, [retrieved on 20211221], DOI: 10.1109/IDAACS53288.2021.9660944
- SVILAINIS L ET AL: "Ultrasound Transmission Spectral Compensation Using Arbitrary Position and Width Pulse Sets", IEEE TRANSACTIONS ON INSTRUMENTATION AND MEASUREMENT, IEEE, USA, vol. 67, no. 8, 1 August 2018 (2018-08-01), pages 1778 - 1785, XP009546146, ISSN: 0018-9456, DOI: 10.1109/TIM.2018.2809838

**Description**

FIELD OF INVENTION

This invention discloses an ultrasonic measurement method, device, and system for ultrasonic estimating the physiological response of a plant leaf and its changes to environmental stimuli. The invention employs spread-spectrum ultrasonic signals of arbitrary durations, to achieve a high SNR in measurements, allowing robust and accurate estimation of the leaf response, such as drought stress, RWC, making measurement applicable and practical under field conditions.

BACKGROUND ART

Direct measurement or sensing of a plant-leaf-response (e.g., 'drought stress', Relative Water Content (RWC), Water Potential (WP)) has been earlier suggested as a better way to implement adequate irrigation scheduling, compared to only estimating the atmospheric water demand or soil moisture status.

There are several relevant prior art documents disclosing ultrasonic measurements for estimating leaf responses. However, these documents disclose methods and devices, applicable to measure leaf response mostly in laboratory environments and conditions. A practical challenge appears, to measure plant-leaf-response in real-time and field conditions.

The research paper by Álvarez-Arenas et al. Determination of Plant Leaves Water Status using Air-Coupled Ultrasounds, 10.1109 /ULTSYM.2009.0188, **[1]** discloses water in plants to be studied by analyzing the magnitude and the phase spectra of the first thickness resonance of their leaves. These resonances appear at ultrasonic frequencies and have been excited and sensed using air-coupled ultrasounds. Despite the complex leaf microstructure, the resonances of the leaves can be well described by the resonances of either a homogeneous and isotropic solid plate or a four-layered composite. Solution of the inverse problem permit to obtain, velocity and attenuation of ultrasound in the leaf, the thickness, density, and thickness resonance frequency of the leaf. Results reveal that these parameters are strongly sensitive to leaf microstructure, water content, and water status in the leaf. As the technique is completely non-contact and noninvasive, it offers a unique possibility to study the complex dynamic behavior of water in plants and the water exchange between the plant and the atmosphere across the leaves.

Another research by Fariñas et al. Monitoring plant response to environmental stimuli by ultrasonic sensing of the leaves, Ultrasound Med Biol. 2014 Sep;40(9):2183-94. doi: 10.1016/j.ultrasmedbio.2014.04.004. Epub 2014 Jul 9 **[2]** describes an application of a technique based on the excitation, sensing, and spectral analysis of thickness resonances of plant leaves using air-coupled and wide-band ultrasound pulse (150-900kHz) to monitor variations in leaf properties caused by plant responses to different environmental stimuli, such as a sudden variation in light intensity, sudden watering after a drought period, and along the diurnal cycle. Four different widely available species, with different leaf features (shape, size, thickness, flatness, vascular structure), were selected to test the technique. After a sudden decrease in light intensity, there was a relative increase in the thickness resonant frequency from 8% to 12% over a 25- to 50-min period. After sudden watering, the relative increase in the resonant frequency varied from 5% to 30% and the period from 10 to 400 min. Finally, along the diurnal cycle, the measured relative variation was between 4% and 10%. The technique revealed differences in both the amplitude of the frequency oscillations and the kinetics of the leaf response for different species and also within the same species. The technique can be equally applied to the leaves of any species that present thickness resonances.

One more research document by Fariñas et al. "Instantaneous and non-destructive relative water content estimation from deep learning applied to resonant ultrasonic spectra of plant leaves" Plant Methods (2019) 15:128 https:// doi.org/10.1186/s13007-019-0511-z **[3]** presents a method for the estimation of relative water content (RWC) in plant leaves from non-contact resonant ultrasound spectroscopy (NC-RUS) data. This technique enables to collect transmission coefficient in a [0.15-1.6] MHz frequency range from plant leaves in a non-invasive, non-destructive, and rapid way. Two different approaches for the inverse problem of the proposed method are evaluated: convolutional neural networks (CNN) and random forest (RF). While CNN takes the entire ultrasonic spectra acquired from the leaves, RF only uses four relevant parameters resulting from the transmission coefficient data. Both methods were tested successfully in *Viburnum tinus* leaf samples with Pearson's correlations between 0.92 and 0.84.

**Technical problem.** The above documents disclose the use of a single short-duration broadband ultrasonic pulse, for sensing responses of plant-leaves-under-test, where the duration of said single pulse is adjusted to the center frequency $f_0$ of the ultrasonic transducer as $0.5x1/f_0$, as stated in the above documents. However, short-pulse-excitation is highly inefficient because the exciting pulse must be narrowed to achieve its wider bandwidth, however, that means having less energy, and therefore, lower SNR. Moreover, most of the pulse energy is concentrated in the lower part of its frequency range, and only a small part of the pulse energy passes through the ultrasonic transducer. Therefore, generated single, short ultrasound pulse, besides losing its energy in the measurement propagation path, also is rather susceptible to environmental impacts and noises, which significantly reduces the Signal-to-Noise Ratio (SNR) and robustness of measurements. Air-coupled ultrasound has large energy losses because of the acoustic impedance mismatch with air for the US transducer and the measured leaf. Losses in the US transducer matching can be improved by better transducer design [6], however, the losses in leaf remain. Leaf losses are not just due to impedance mismatch, but also due to significant attenuation in the leaf. These losses can reach 60-100dB. The only way to counter these losses is to increase pulse excitation amplitude, but significant safety, transducer damage, and PCB design issues arise for excitation voltages beyond 300V. Essential, that leaf resonance can occur in a broad frequency range, usually 300-1000kHz range. Existing transducer technologies are not able to cover such a broad frequency range. Therefore, several transducers with different frequency ranges have to be used [1], [2],[3]. A practical challenge is to measure plant-leaf response in real time and under field conditions. Despite using relatively broadband transducers, [1] and [2] have used two different frequency range transducer pairs, [3] used three pairs of transducers and all have used averaging up to 120 measurements and the magnitude and phase of the transmission frequency response were concatenated before obtaining the final solution. Such an approach is necessary to get high SNR over a broad frequency range. Averaging and transducer exchange is suitable only in laboratory conditions. Stable leaf position is difficult to maintain under various outdoor disturbing impacts (plant motion, changes of humidity, pressure, temperature, etc.). If a portable and real-time measurement is required, the exchange of transducers is not an option. The device must be practical for professional use by agriculture specialists and farmers.

For example, [1] Álvarez-Arenas et al. disclose that *"transmitter is driven by a negative square semi cycle tuned to the centre frequency of the transducers"*. Further, [3] Fariñas et al. disclose that *"a commercial pulser/receiver (5077PR, Olympus, Houston, TX, USA) was used to drive the transmitter with a 200V amplitude square semi cycle tuned to the transducers centre frequency and to amplify and filter the electrical signal provided by the receiver transducer (up to 40 dB and low pass filtered: 10 MHz)"*. The same short US pulse is employed also in [2] Fariñas et al. *"(200V amplitude semi-cycle of square wave tuned to the transducer center frequency)"*.

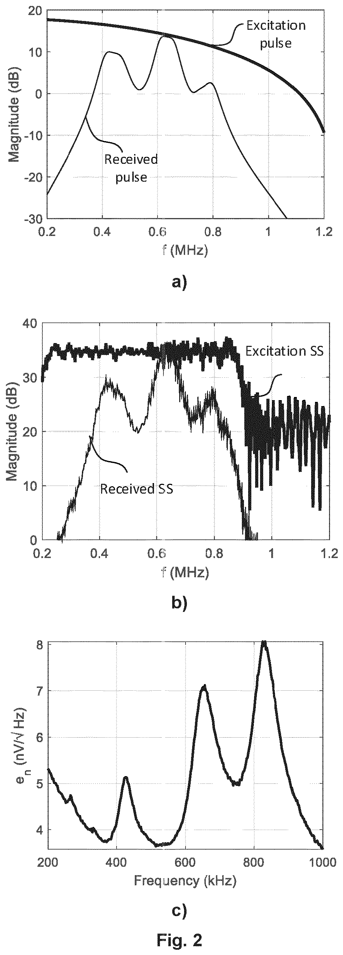

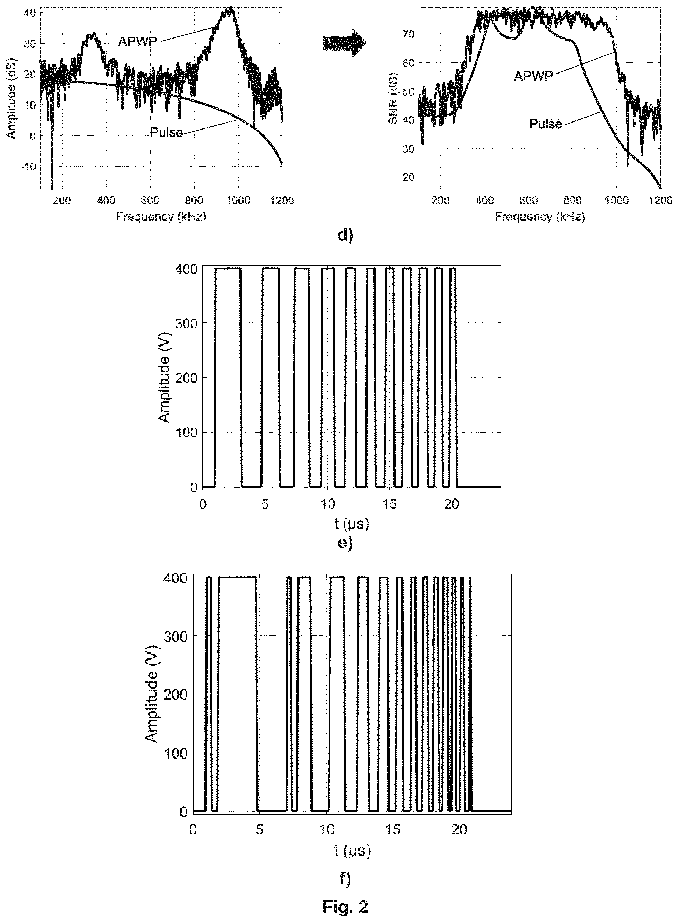

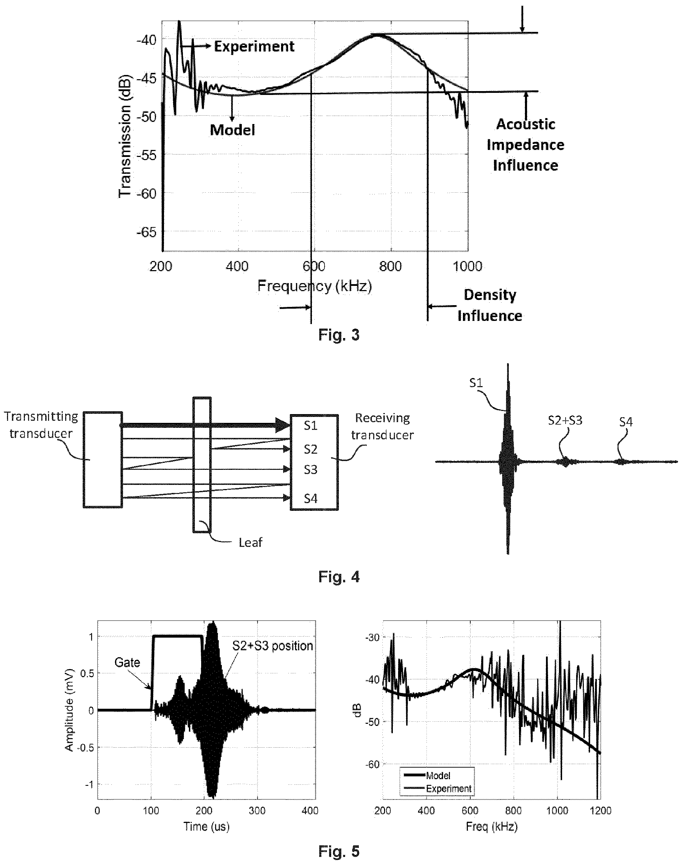

Alvarez-Arenas et al. [1] disclose a model of a plant-leaf-under-test, comprising one or more (four) layers of different densities. According to the model, ultrasound signal transmission and its internal reflections inside the leaf become more complex, providing a resonant (reverberant) response, as presented in [1] Figures 2 and 3. These resonances (reverberations inside the leaf) are strongly related to the leaf's internal microstructure, water content, and status in the leaf. However, these multiple reflected signals have small amplitudes, therefore, even less perceptible and distinctive from noise by using a single broadband ultrasonic pulse.

The problem lies in that both thickness and propagation have to be estimated by the solution of the inverse problem. Meanwhile, the resonance peak position alone is defined by propagation time through the leaf thickness, which is a function of the ratio of the thickness and velocity. But velocity also defines the acoustic impedance which in turn defines the ratio between resonance peak and valley. The width of the peak is defined by density and attenuation. Altogether, the phase response defines all four leaf parameters (thickness, density, ultrasound propagation velocity, and attenuation). Yet, convergence criteria of the inverse problem are not sharp at the optimum, therefore thickness and velocity error sensitivity to noise are large.

Therefore, the use of leaf-sensing methods with a short pulse does not ensure sufficient SNR over the frequency range where resonances of the leaf may occur. Furthermore, the quality of the solution of the inverse problem is defined by SNR and the frequency range in which high SNR is ensured. SNR may be improved by averaging, but averaging requires stable air and leaf, which are not possible in field conditions and are extremely time-consuming.

**Other prior art documents relevant to the present invention.** The paper by D. Sancho-Knapik "Air-coupled ultrasonic resonant spectroscopy for the study of the relationship between plant leaves' elasticity and their water content', published in: IEEE Transactions on Ultrasonics, Ferroelectrics, and Frequency Control (Vol. 59, Issue: 2, February 2012), DOI: 10.1109/TUFFC.2012.2194, (D1) discloses: *"air-coupled wideband ultrasonic piezoelectric transducers are used in the frequency range 0.3 to 1.3 MHz to excite and sense first-order thickness resonances in the leaves of four different tree species at different levels of hydration. The phase and magnitude spectra of these resonances are measured, and the inverse problem solved; that is, leaf thickness and density, ultrasound velocity, and the attenuation coefficient are obtained. The elastic constant in the thickness direction (c33) is then determined from density and velocity data. The paper focuses on the study of c33, which provides a unique, fast, and noninvasive ultrasonic method to determine leaf elasticity and leaf water content."* This paper discloses a leaf response measurement solution employing a single short broadband US pulse, generated by a Panametrics P/R 5077 pulser which produces a single negative square pulse. A generated US pulse transmission through a leaf-only model is used. The inverse problem (to obtain the adjusted parametric model of the leaf) is solved in the frequency domain.

Another paper by Collazos-Burbano et al., "Air-coupled ultrasound spectroscopy and its potential application in agro-industry' published by IEEE in: 2014 XIX Symposium on Image, Signal Processing and Artificial Vision, Date of Conference: 17-19 September 2014, DOI: 10.1109/STSIVA.2014.7010158, (D2) discloses: *"Ultrasonic Spectroscopy (US) is a new alternative technique to extract parameters of vegetal tissues and properties of agro-industrial materials. The US technique involves a set-up in transmission of air-coupled ultrasonic transducers to make inspections contactless and in a non-invasive way. This is an advantage for some samples which cannot be in contact with the sensorial system. In this*

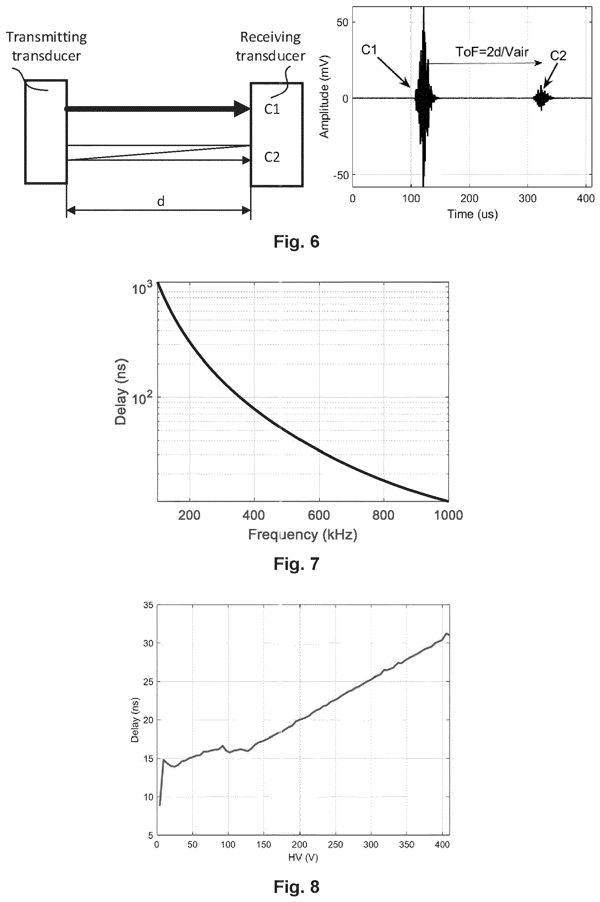

*work we have tested Helliconia leaves and paper samples, focusing in the extraction of mechanical properties as density, acoustic velocity, acoustic attenuation and thickness of samples. Special interest is the relationship between the natural vibration mode and the water content in Helliconia leaves. The extraction of properties involves the solution of an inverse problem associated with the transmission of acoustic waves in three media (air-sample-air). Results show that estimation of these characteristics can be obtained with errors less than 12%. Also, a sensitivity analysis was performed to study how well the numerical method works in presence of noise, obtaining minimum errors in computations at signals to noise ratios as low as 6dB."* This paper discloses a single broadband pulse (by Panametrics P/R 5077 pulser which produces a single negative square pulse). Only a transmission through-leaf model is used. The inverse problem solution is computed in <u>frequency domain</u>. Fig. 7 indicates that SNR is very important in convergence of the results, however, the paper indicates to improve the SNR by averaging only. A "white" (i.e., flat spectrum) noise is assumed in this disclosure.

One more paper by T Gómez Álvarez-Arenas "Ultrasonic Sensing of Plant Water Needs for Agriculture" published in Sensors 2016, 16(7), 1089; https://doi.ora/10.3390/s16071089 (D4) discloses: *"Fresh water is a key natural resource for food production, sanitation and industrial uses and has a high environmental value. The largest water use worldwide (~70%) corresponds to irrigation in agriculture, where use of water is becoming essential to maintain productivity. Efficient irrigation control largely depends on having access to reliable information about the actual plant water needs. Therefore, fast, portable and non-invasive sensing techniques able to measure water requirements directly on the plant are essential to face the huge challenge posed by the extensive water use in agriculture, the increasing water shortage and the impact of climate change. Non-contact resonant ultrasonic spectroscopy (NC-RUS) in the frequency range 0.1-1.2 MHz has revealed as an efficient and powerful non-destructive, non-invasive and in vivo sensing technique for leaves of different plant species. In particular, NC-RUS allows determining surface mass, thickness and elastic modulus of the leaves. Hence, valuable information can be obtained about water content and turgor pressure. This work analyzes and reviews the main requirements for sensors, electronics, signal processing and data analysis in order to develop a fast, portable, robust and non-invasive NC-RUS system to monitor variations in leaves water content or turgor pressure. A sensing prototype is proposed, described and, as application example, used to study two different species: Vitis vinifera and Coffea arabica, whose leaves present thickness resonances in two different frequency bands (400-900 kHz and 200-400 kHz, respectively), These species are representative of two different climates and are related to two high-added value agricultural products where efficient irrigation management can be critical. Moreover, the technique can also be applied to other species and similar results can be obtained."* The dislcosed solution employs a single short broadband pulse *("shape of the excitation electrical pulse: either spike or semicycle of square wave")*. A US transmission through the leaf-model is considered. The inverse problem solution is performed in the <u>frequency-domain</u> *("extraction of leaf parameters from the measured resonance spectra is performed by solving the inverse problem")*. The *"separation between transducers and leaf (DL) must be large enough so that the through transmitted signal does not overlap with the reverberations in the transducer/leaf air-cavity".*

One more paper by L.Svilainis at all "Resource Tradeoff Analysis of Plant Physiological Status Sensor with Cloud Connectivity" published by IEEE in: 2021 11th IEEE International Conference on Intelligent Data Acquisition and Advanced Computing Systems: Technology and Applications (IDAACS), Date of Conference: 22-25 September 2021, DOI: 10.1109/IDAACS53288.2021.9660944, (D5) discloses that: *"measurements carried out in the field require power consumption planning so sufficient amount of measurements can be carried out without battery recharge. If instantaneous results report is expected, then communication and data storage, processing resources also have to be proportional to the load expected. Latency of the data transmission, processing and reporting should be maintained within acceptable limits. It communicates with cloud service using the smartphone as intermediate node. Paper presents the analysis of the power consumption and data latency versus operational modes. Models have been developed, accounting the data acquisition algorithm and data transmission protocols. Analysis results can be used to estimate the sensor and gateway service life from one charge or maximum time between measurement initiation and report delivery. It was found that both sensor and gateway could sustain their operation from one charge over one day operation. As of latency, it was found that single core single server solution can maintain just few users simultaneously. More servers are needed for larger users pool: e.g. 200 servers are required to service 10000 users."* The paper discloses a programmable spectrum for an emitted US signal. Only the signal spectrum is considered (*"compensate for electronics and transducer effects"*). This signal shaping solution is considered for water environment.

There are no approaches disclosed to how to improve the quality of the inverse problem solution of plant-leaf response measurements to a satisfactory or an arbitrary level. The present invention discloses teaching how to solve the aforementioned problem efficiently.


SUMMARY OF INVENTION


**Solution.** The invention discloses a method and system, where Arbitrary Position and Width Pulses (APWP) sequences derived from nonlinear-frequency-modulated Spread-Spectrum (SS) signals are employed, for generating the US signals to measure (sense) responses of plant leaves in the field conditions.

The hardware setup and external view for the sensing device (1) may look similar as described in the recent prior art documents **[2], [3],** but it must have specific features: special pulser electronics, capable of generating long APWP sequences and compact size to carry to the field.

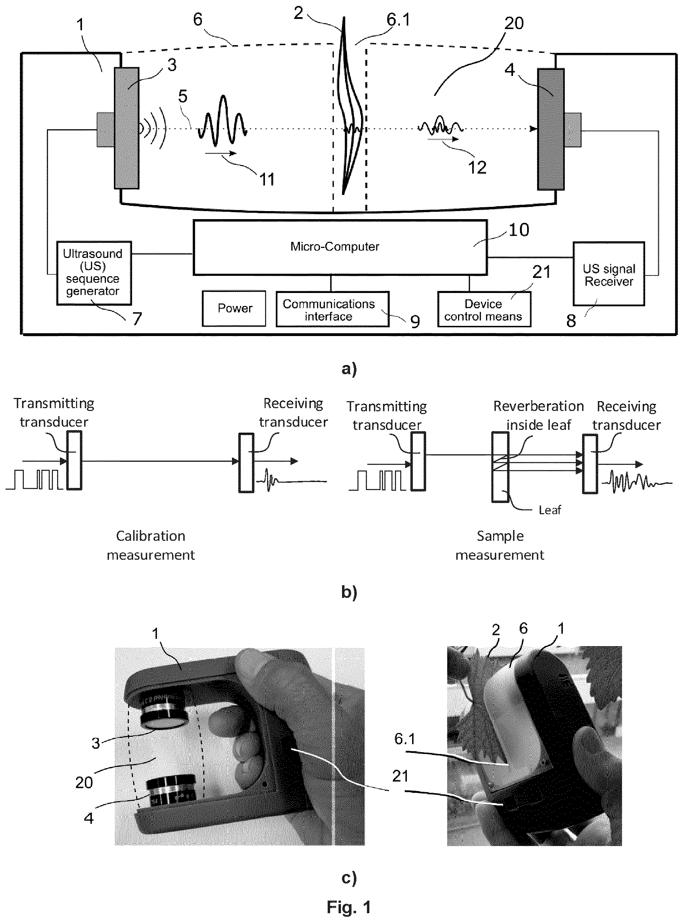

Meanwhile, here a novel feature is that a single broadband pulse is replaced by substantially and arbitrarily longer APWP SS signals, disclosed by **[4]** Svilainis et al. Ultrasound Transmission Spectral Compensation Using Arbitrary Position and Width Pulse Sets, IEEE Transactions on Instrumentation and Measurement, March 2018, DOI: 10.1109/TIM.2018.2809838. Longer SS signals have better passband coverage and better SNR. Yet, this may be not enough to have a robust measurement. The problem is that both spectra of the transmission between transducers are nonuniform and noise spectra are nonuniform. Therefore spectrum shape of the APWP SS signal is controlled to compensate for SNR reduction due to spectral component losses, e.g., at the edges of the passband (Fig.1 and Fig.4 in [4]), or for nonuniform input noise.

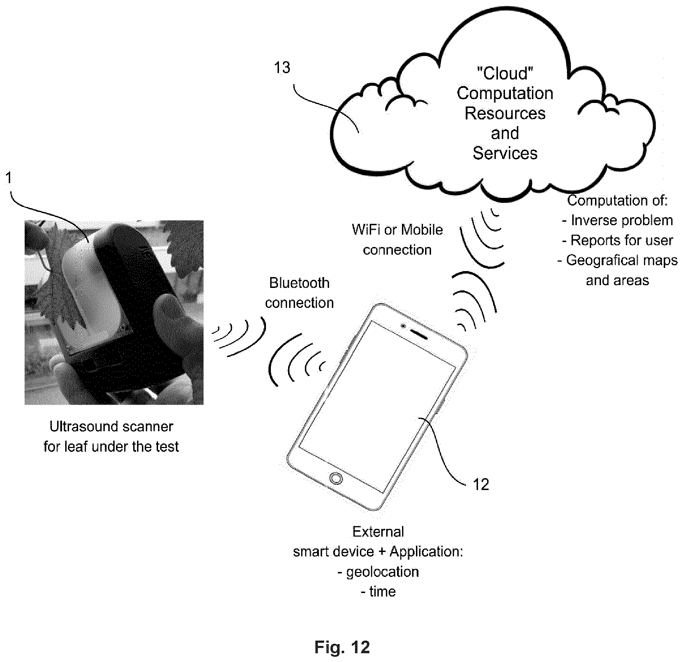

For novelty distinction from prior art documents **[1], [2], [3],** it can be considered that emitted APWP SS signals (Fig.12 and Fig.13 in **[4])** are excited by sequences of several high-voltage (HV) pulses. Moreover, such a sequence of HV pulses is configured arbitrarily of such number, positions, and widths of HV pulses, that the generated US signal provides a better SNR that would be sufficient for particular ultrasound measurement applications.

For example, an APWP SS signal may be configured as frequency-modulated harmonic oscillation, known as a "chirp" signal. In the scope of the present invention, we do not put restrictions on using any coded sequences, except that the sequence is suitable to generate US signals of sufficient bandwidth of high SNR for reliably measuring leaf response properties.

An important difference of leaf resonance spectroscopy from [4] is that distance between transducers cannot be large for two reasons: i) ultrasonic beam wavefront must be flat, i.e. leaf must be measured in the near field of the transducer, and ii) sensor must be small, increasing the distance between transducers would increase the sensor size. Long SS signals will overlap due to the short operation distance, so signals' duration is limited by the distance between transducers.

Therefore, another novel feature appears that a specific and computation-intensive signal processing is employed to solve the inverse problem of extracting the leaf-specific ultrasonic response from the received signals. The problem of overlapping multiple reflections of the long SS signals is solved in such a way.

The method also involves the use of a leaf model, such as a one-layered or multi-layered model described in **[1]** Álvarez-Arenas et al. Fig.2. In the present invention, the leaf model was augmented to a full propagation digital model comprising at least one layer defined by its thickness, density and stiffness parameters, and simulating a delay of the transmitted US signal, and a reverberation model, including multiple reflections between the leaf and transducers. The model signal is produced from the signal measured in calibration mode, i.e. without leaf. The inverse problem for the model's best match to the measured sample signal, with the leaf (2) inserted, is solved in the time domain by adjusting the model parameters.

Further, the model includes environmental parameters, such as air density, temperature, and US propagation velocity. While stable in laboratory conditions, these parameters can vary in field conditions. These parameters are initially estimated from calibration measurements. Final tuning of these parameters is carried out in fitting the full propagation digital model. Also, the difference in electronics transfer function in calibration and sample measurements is measured beforehand. Every set of obtained calibration and sample signals is compensated for this influence. The finally adjusted leaf thickness, density, and US velocity and attenuation parameters provide the measurement result.

For the implementation of the method, a preferred system implementation embodiment comprises:

- a compact portable device for ultrasonic sensing of plant leaf responses;
- a mobile device, such as a smartphone, serving as a gateway to clouds, providing wireless (Bluetooth) connection to the sensing device, adding geolocation information, photos, labels, and RF tag information to the measurement data, and transmitting via a wireless connection (WiFi or mobile) for further processing to clouds;
- a cloud- or server-infrastructure-based service, for signal processing and solving the inverse problem, data storage, and reporting via online or web services, in text or graphical format.

**Effects.** The invention enables increased SNR of ultrasonic measurements for obtaining and estimating a plant-leaf ultrasonic response (relevant to certain known physiological parameters of the plant-leaf, such as RWC, WP, turgidity, etc.) and also enables a more effective plant-leaf response estimation process in presence of environmental factors, for example, in real field conditions.

DESCRIPTION OF DRAWINGS

The invention is explained in the drawings. The drawings are provided as a reference to possible embodiments and are not intended to limit the scope of the invention. The drawings and diagrams do not necessarily correspond to the scale of the details of the invention. Details that are irrelevant and not necessary to explain the invention, are not provided in the drawings.

**Fig. 1** Ultrasonic leaf-sensing setup for the present invention:

**(a)** Device setup 1 - leaf-sensing device; 2 - leaf under test; 3 - transmitting ultrasonic transducer; 4 -receiving US transducer; 5 - US signal propagation path; 6 - means for allocating the leaf in a predetermined position within the device (1), between the transmitting and receiving US transducers (4, 5); 7 - US pulse sequences generator; 8 - US signal receiver; 9 - communications interface; 10 - microcomputer; 11 - propagating US pulse; 12 -transmitted US pulse which has passed the leaf (2); 20 - a cylinder-shaped or barrel-shaped US measurement channel, with the US transducers 4, 5 at its ends; 21 - block of device local control means (e.g., buttons, led-indicators, control-by-voice, etc).
**(b)** Measurement modes used in Ultrasonic resonance spectroscopy: calibration mode (left) is when the US signal propagates between two US transducers without a leaf; sample mode (right) is when the measurement is taken with a leaf in between transducers. The US signal passed the leaf is affected by leaf thickness, density, US propagation velocity, and attenuation of the leaf (thereby, causing a delay and adding reverberation to the transmitted US signal);
**(c)** the view of a real leaf-sensing ultrasonic device (1);

**Fig. 2** Ultrasonic signals, types, and characteristics:

**(a)** excitation by a single pulse is highly inefficient because the pulse must be narrowed to achieve a wider band, which means, less energy and lower SNR. Most of the pulse energy is concentrated in the low-frequency part, only the rest part matches the bandwidth of the ultrasonic transducer;
**(b)** the spectrum of the transmitted linear frequency modulation (LFM) SS signal can be controlled to match the transducer passband and the energy is higher; therefore the SNR of the received signal is higher than that of the pulse, but the received signal spectrum is not flat;
**(c)** the noise spectrum is also not flat due to the interaction of the complex impedance of the ultrasonic transducer and receiver input current noise as explained in [7] and [8];
**(d)** noise spectrum and transducers transmission function can be measured beforehand; then the spectrum of the transmitted APWP signal can be adjusted to compensate for losses and noise (left), for example, at the edges of the bandwidth, as shown by comparison of a pulse and SS received calibration signal spectra in case of compensation for SNR; High SNR is obtained beyond the transducer passband (right);
**(e)** LFM-type broadband signal; the signal length was significantly reduced to demonstrate individual pulse features;
**(f)** APWP-type losses-compensating signal; the length of the signal was significantly reduced to demonstrate individual pulse features.

**Fig. 3** Example of the leaf transmission response in the frequency domain, demonstrating that it is not enough to have good SNR at resonance peak; different leaf parameters influence different features of the spectra; the broader the range of high SNR, the better the leaf parameters estimation quality.

**Fig. 4** Full signal propagation path, including the main measurement signal S1, signal S2 propagated through the leaf, reflected from receiving transducer, reflected from leaf, signal S3 reflected from leaf, reflected from transmitting transducer, propagated through the leaf, and signal S4 reflected between transducers and propagated through leaf 3 times.

**Fig. 5** Example of the sample signal (with leaf inserted), where long SS signal is used (left), demonstrating that it is not possible to use gating for long signals; therefore there are no resonant peaks (right) and fitting fails.

**Fig. 6** Example of the calibration signal (no leaf inserted), demonstrating the main measurement signal C1 propagated between transducers once and second reflection signal C2 propagated between transducers 3 times; therefore time shift (time of flight, ToF) of C2 relative to C1 is carrying the information about US propagation velocity in air.

**Fig. 7** Example of the delay difference when comparing gains used for calibration and sample signals acquisition; this difference is caused by a difference in phase AC response of the amplifier used for calibration and sample modes.

**Fig. 8** Example of the delay introduced due to varying excitation voltage; this difference is caused by the slew rate limit of the US sequences generator; if different excitation voltage is used for calibration and sample modes, there will some additional delay in these signals.

**Fig. 9** Conceptual structure of signal processing used to obtain the parameters used to characterize the leaf.

**Fig. 10** Proposed protective hood (6), providing a cylinder-shaped or barrel-shaped US measurement channel space, serves to reduce the microflows created by leaf insertion into measurement insert (6.1); a previous art used "U"-shaped hood which allowed large swirls to develop; the new hood breaks the swirls into smaller ones which facilitates the steady air condition faster settling time.

**Fig. 11** Processing flow diagram to obtain the leaf-under-test (2) parameters, where 3.1 to 3.24 are the steps of the method;

**Fig. 12** Preferred embodiment of the system, comprising, at least:

> 1 - the device for sensing leaf (2) responses by ultrasonic signals;
> 12 - mobile device providing wireless connection, such as Bluetooth, Wireless or Mobile connection,
> 13 - cloud computing resources and services for digital signal processing and Inverse problem solving in the time domain, and calculating the leaf response results.

DETAILED DESCRIPTION OF INVENTION

The invention teaches how to implement leaf response sensing and estimation by ultrasonic measurement, as described in documents **[1], [2], [3],** and by employing APWP SS signals described in **[4],** Svilainis et al. "Ultrasound Transmission Spectral Compensation Using Arbitrary Position and Width Pulse Sets", IEEE Transactions on Instrumentation and Measurement, March 2018, DOI: 10.1109/TIM.2018.2809838.

One more prior art document **[5]** discloses a method and system to measure plant-leaf response. Particle swarm optimization (PSO) was proposed there for inverse solution convergence control, instead of stochastic gradient descent with momentum (SGDM) optimizer used in [1],[2],[3]. PSO avoids sticking to local minima.

The present invention provides advantages over **[1], [2], [3],** and **[5]** by the following features:

**1.** Fitting (convergence criteria calculation) in the time domain instead of the frequency domain removes the need to calculate the signal spectrum of pure S1 signal (Fig.4). Due to the interfering multiple reflections, S2 and S3 (leaf-transducer, Fig. 4) gating of S1 is not possible. Furthermore, gate (usually it is a windowing function, Fig. 5, left) size and position selection requires careful investigation of the received signal structure and sometimes may fail, producing distorted spectral response (Fig. 5); usually is done manually which is not acceptable if measurement processing has to be independent of the signal used.

**2.** However, feature 1 is not enough (time domain convergence criteria calculation) if significant signals overlap is expected (Fig.5). Therefore, a full propagation model is developed, including the method to simulate the signals S2, S3 (leaf-transducer reverberation, Fig. 4) and S4 (transducer-transducer reverberation, Fig. 4). Then signals S2, S3 and S4 are subtracted from sample signal to expose the S1. Important, that the signals S2, S3, and S4 also carry the information about the plant-leaf and air parameters. While [1], [2], [3], and [5] documents discard these signals, the present invention uses them as an additional source of information, required to estimate the leaf parameters.

**3.** Temperature and pressure variation in the field conditions (e.g., in the vineyard) will cause air density and propagation velocity to deviate from ones expected in laboratory conditions. Document [5] indicated that if a change in air parameters is left unaccounted for, there would be up to 3.6% errors in leaf thickness, up to 15% errors in leaf density, and up to 6.8% errors in ultrasound velocity in the leaf. It was only theorized that correction of these errors is possible by measuring either ultrasound speed in the air and pressure or temperature and pressure. Nevertheless, no solution was proposed. Even with a temperature sensor available, the temperature registered by the sensor would lag the actual air temperature. A new feature here is that ultrasound velocity in air is measured from calibration measurement signals C1 and C2 (Fig. 6). Signal C1 propagates between transducers once (Fig.1b, left, Fig.6). Signal C2 propagates three times between transducers (Fig. 6). Therefore, with the distance between transducers d known from sensor design, time shift (time of flight, ToF) of C2 relative to C1 is carrying the information about US propagation velocity in air. Air velocity can be estimated as 2d/ToF. With air velocity available, air temperature can be estimated, because the relationship is known. The temperature can be used for air density estimation.

**4.** Electronics influence compensation (difference in amplifier AC response, Fig. 7 and excitation voltage influence on pulse delay, Fig. 8) improves the inverse solution accuracy. Both the resonances caused by reverberation within the leaf and the absolute signal in the leaf are used for leaf parameter estimation. If electronics influence signal delay is left unaccounted for, electronics-caused-delay has to be absorbed by the model. This will result in errors in leaf thickness and other related parameter estimation.

**5.** Application of special type excitation signals (APWP, Fig. 2f) for SNR compensation beyond the passband expands the frequency range available for measurements (Fig. 2d). Frequency range defines the range of the measurable leaf thickness, therefore the range of leaf thickness that can be measured is expanded. Both the leaf thickness and the ultrasound propagation in leaf velocity define the signal delay and position of resonance peaks. Fortunately, US velocity in the leaf also defines the leaf acoustic impedance which in turn defines the ratio between resonance peak and valley (Fig. 3). All together, including the leaf transmission phase response and width of the resonance peak, define all four leaf parameters (thickness, density, ultrasound propagation velocity, and attenuation). Yet, any convergence criteria of the inverse problem are not sharp at their optimum because of the thickness and velocity mutual influence on delay: while the solution for delay may be accurate, there might be significant deviations for thickness and velocity. Therefore it is very important that high SNR is provided over as broad as possible frequency range and is uniform over the examined frequency range. It is also important, that complex transducer impedance interaction with electronics' current noise source produces nonuniform input noise (Fig.2c). Excitation signal spectrum has to compensate for this by supplying more energy at high noise frequency components at expense of a reduced level of frequency components where noise is low (Fig.2d).

**6.** The use of variable excitation voltage and variable reception gain allows for making measurements on a broader range of the leaf in the signal loss sense. While leaf thickness can be the same, signal losses (due to attenuation and impedance mismatch) within the leaf can vary significantly. This means that if only gain is varied and excitation voltage is left constant then calibration measurement may need signal attenuation in the receiver, while sample measurement would need significant gain. This will result in very low SNR for the sample signal. Variable excitation voltage together with variable gain solves the problem.

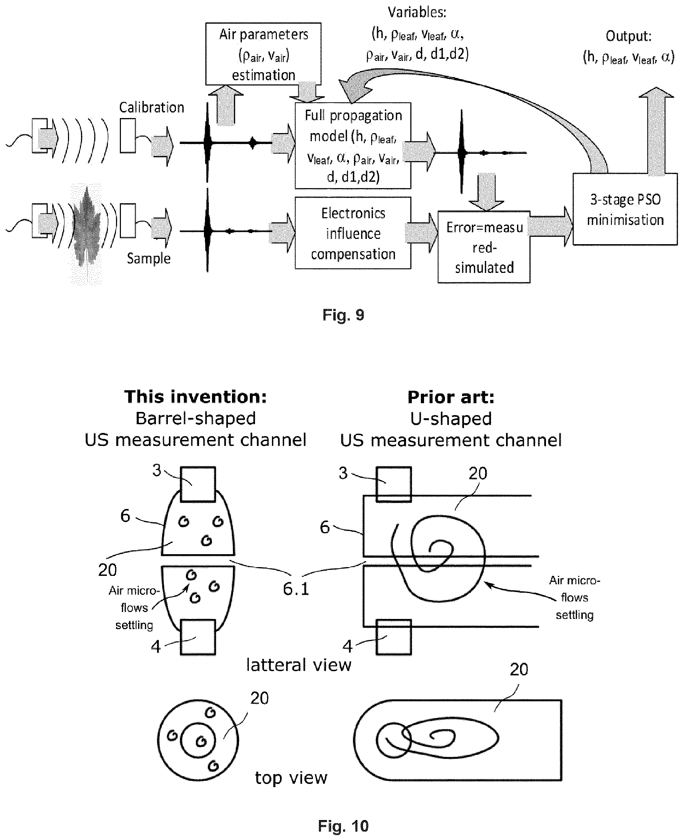

**7.** The special shape of protective hood 6 (Fig. 10, left) for ultrasound propagation between transducers 3,4 facilitates the plant-leaf 2 perpendicularity to ultrasound beam 5 adjustment and reduces the air micro streams in the ultrasound propagation path, which are created by leaf insertion. Meanwhile, U-shaped protective hood used by previous art [2] (Fig.4) allows for large swirls to develop (Fig. 10, right). The proposed barrel-shaped US channel splits the swirls into smaller ones which vanish faster. While air micro stream settling time is not important in laboratory conditions (long settling times are acceptable), however, the field conditions require briefer measurement times including also air micro stream settling time.

**8.** Full automation of measurements implemented: the user is not required to select and configure US signal acquisition parameters (excitation voltage, record length, reception gain, etc.), time-gate positions, and inspect the resulting transmission response: the system does it all adaptively and automatically.

**Leaf-sensor device.** A schematic setup for the ultrasonic leaf-sensor device (1) is presented in Fig. 1a. The device comprises, at least: ultrasonic transducers, transmitter, and receiver (3, 4) which set up a measurement or signal propagation path (5), and the plant-leaf (2)-to-be-tested is inserted into a special insert 6.1 between the transducers. The rest components of the device (1) are, at least:

6 - means to fix the leaf in a predetermined position, serving as a wind-protective hood too, also, providing a cylinder-shaped or barrel-shaped US measurement channel 20, and comprising said insert 6.1 for the plant-leaf under test;
7 - US pulse generator;
8 - US signal receiver;
9 - communications interface;
10 - micro-computer;
11 - emitted US pulse;
12 - US pulse which has passed the leaf (2);
21 - the device's local control means (e.g., buttons, led indicators, etc.).

A compact and portable leaf-sensor device for sensing plant-leaf (1) response by the present invention, is shown in Fig.1c.

**Signals.** Signals used for plant-leaf parameters estimation are registered by performing US measurement in two modes:

- without a plant leaf, a "calibration" measurement (Fig.1 b, left, Fig. 6);
- and with a plant leaf (2) inserted into the leaf insert (6.1) between the transducers (3, 4), a "sample" measurement (Fig.1 b, right, Fig. 4).

The received "calibration" ultrasonic signal is affected only by transmission electronics, transmitting transducer, air properties, receiving transducer, and reception electronics (C1 in Fig. 6). The received "sample" ultrasonic signal, which has passed the leaf-under-test (S1 in Fig. 4), atop of same as "calibration" signal effects, additionally, carries information about leaf thickness, density, and US propagation velocity and attenuation of the leaf. Signal propagation through the plant leaf adds delay to the signal and multiple reflections inside the leaf cause reverberation, which all together result in specific temporal and spectral responses.

Calibration and sample signals are obtained at the different gain and excitation voltage settings. Before going into further processing, signals must be compensated for differences. Any one of the sample signals or the calibration signal is passed through compensating filter, which has transmission magnitude and phase response corresponding to the difference in electronics settings.

Forming of spread-spectrum ultrasonic signals (SS US) for this invention is laid down in the research by Svilainis et al. **[4],** disclosing a methodology for forming APWP SS signals. The APWP SS signals are used between two ultrasonic transducers (2, 3), from the transmitter (2) to the receiver (3). The example spectral characteristics of such APWP SS signals once received in calibration mode, is shown in Fig.2b and Fig.2d. The example of such APWP SS signals before transmission in the time domain, is shown in Fig.2e and Fig.2f.

In the present invention, arbitrarily elongated SS signals are used for measuring the leaf-response characteristics. A plant leaf (2) has an average thickness of 0.15-0.4 mm, resulting in a 0.3-1 MHz frequency range of interest [1],[2],[3]. The optimum pulse duration for center frequency $f_0$ of the ultrasonic transducer can be calculated as $0.5/f_0$, or 500-1600ns range. For such a short and limited-amplitude US pulse, the measurement SNR for this application is low and mostly insufficient (Fig.2a), so several different frequency transducers and averaging have to be used, as disclosed in **[1], [2], [3].**

The solution for higher SNR could be to use much longer US SS signals but, differently from [4], the distance between US transducers cannot be large to keep the US beam wavefront flat and the leaf-sensor device size small. Therefore, long SS signals will overlap due to the short operation distance, so signals' duration is limited by the distance between US transducers. This means that there will be multiple reflections between the transducer and leaf and transducer and transducer (signals S2, S3, and S4 presented in Fig. 4) in the propagation path (5) and they can overlap. It must be noted that the calibration signal also contains multiple reflections between transducers (C2 in Fig. 6). However, the present invention assumes that these interfering reflections in signals S2, S3, S4, and C2 also carry the information about the leaf and air parameters. So, instead of being discarded as per [1],[2],[3], or [5], here they are exploited usefully. The conceptual signal processing structure used to obtain the leaf parameters is presented in Fig.9.

Signals S1, S2, S3, and S4 have to be separated to extract useful information about the measured plant leaf. This is done while solving the inverse problem. Signal propagation models are required to develop the algorithm for the inverse problem solution estimation.

**Model of signal-through-leaf propagation.** A simulated sample signal is obtained by modeling the propagation of the calibration signal through the leaf (with variable leaf parameters: thickness, density, US propagation velocity, and attenuation; and constant air parameters: US propagation velocity and density) and simulating the signal reflection from leaf (with variable leaf parameters: thickness, density, US propagation velocity, and attenuation; and constant air parameters: US propagation velocity and density), reflection from transducer and reverberation (with adjustable distance from transmitting transducer to leaf and distance from receiving transducer to leaf), caused by these reflections. This simulated signal is compared with the measured sample signal. Model parameters are iteratively changed using an optimization algorithm (Particle Swarm Optimization, PSO, Artificial Bee Colony, ABC, or any other suitable for the task) until the signals coincide with maximum accuracy (solving the inverse problem).

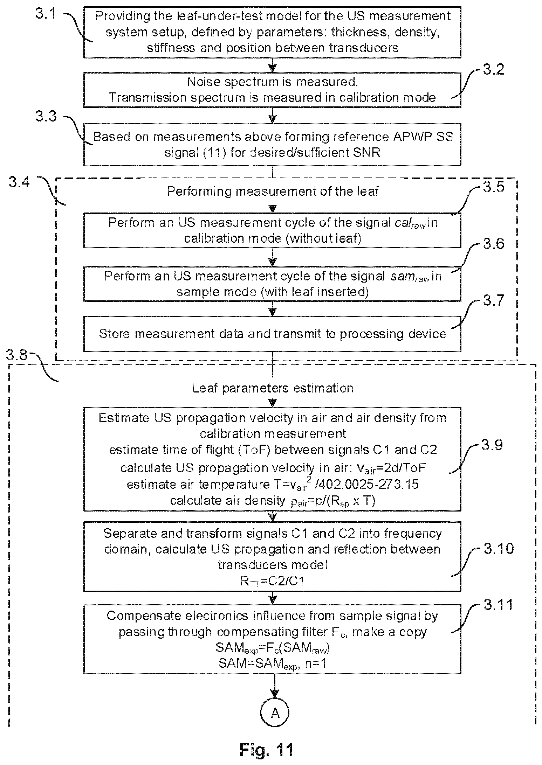

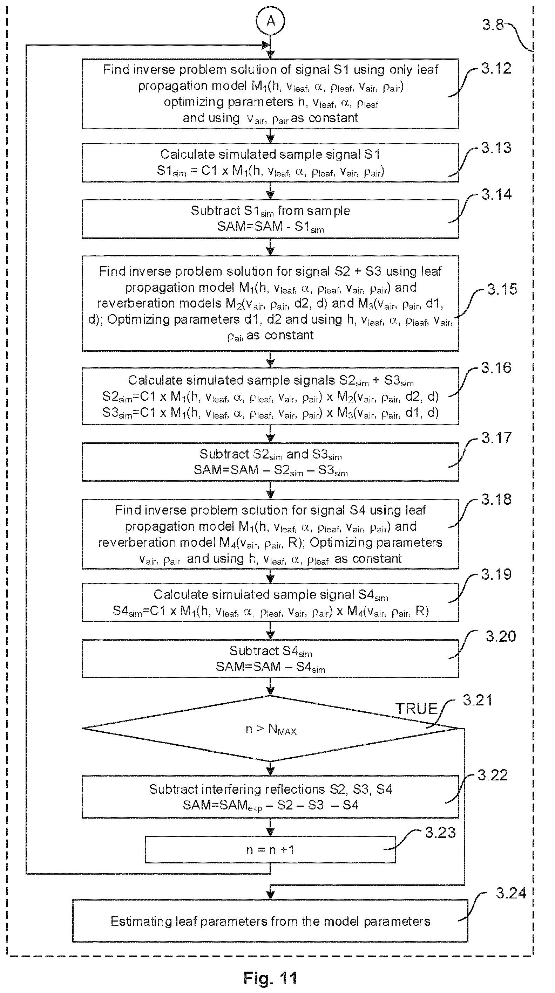

The model includes environmental parameters, such as air velocity, density, and temperature. While stable in laboratory conditions, these parameters can vary in field conditions. These parameters are initially estimated from calibration measurement (Fig.1b left) from the distance between C2 and C1 (Fig.6). Final tuning of these parameters is carried out in fitting the full propagation digital model (Fig.9 and Fig.11). Also, the difference in electronics transfer function in calibration and sample measurements (Fig.7 and Fig.8) are measured beforehand. Every set of obtained calibration and sample signals is compensated for this influence. The finally adjusted thickness, density, and US velocity and attenuation parameters provide the measurement result.

A signal-through-leaf propagation model is similar to the one used in **[1]** Álvarez-Arenas et al. The model describes how a signal obtained in calibration mode can be converted into a sample mode signal. The model works in the frequency domain. Therefore, calibration signal *cal(t)* is first transferred to the frequency domain using the Discrete Fourier Transform (DFT), obtaining *CAL(ω).* First, this model takes into account that the leaf is displacing the air over the leaf thickness h. This is done by multiplication with exponent in the frequency domain:

$$CAL'(\omega) = CAL(\omega) \cdot e^{\left(i\omega \frac{h}{v_{air}}\right)} \qquad (1)$$

Reverberation within the thickness of the plant leaf is simulated using the well-known equation from delay-line theory. For a single layer, the model is defined as:

$$M_1(\omega, h, v_{leaf}, a, \rho_{leaf}, v_{air}, \rho_{air}) = \frac{-2Z_{air}Z_{leaf}}{2Z_{air}Z_{leaf}\cos(k'h) + i(Z_{air}^2 + Z_{leaf}^2)\sin(k'h)} \qquad (2)$$

where $Z_{air}$ is the acoustic impedance of air and $Z_{leaf}$ is the acoustic impedance of the leaf, $k'$ is the complex wave number:

$$k' = \frac{\omega}{v_{leaf}} - i\alpha \qquad (3)$$

where $\omega$ is angular frequency $(2\pi f)$, $v_{leaf}$ longitudinal US phase velocity inside the leaf, $\alpha$ is longitudinal US wave attenuation coefficient:

$$\alpha = \alpha_0 \left(\frac{f}{f_0}\right)^n \qquad (4)$$

Air Impedance is

$$Z_{air} = v_{air}\rho_{air} \qquad (5)$$

The plant-leaf acoustic impedance is

$$Z_{leaf} = v'_{leaf}\rho_{leaf} \qquad (6)$$

$$v'_{leaf} = \frac{\omega}{k'} \qquad (7)$$

Finally, the sample signal S1 is obtained as:

$$S1_{sim}(\omega) = CAL'(\omega) \cdot M_1\big(\omega, h, v_{leaf}, \alpha, \rho_{leaf}, v_{air}, \rho_{air}\big) \qquad (8)$$

If a sample signal in the time domain is required, this transformation is accomplished using the Inverse DFT (IDFT), obtaining *cal(t)*.

**Model for multiple "leaf-transducer"-type reflections.** Multiple reflections leaf-transducer S2 and S3 propagation models can be derived from the general US wave propagation theory in layered structures, e.g. **[9]**. The model describes how simulated signal S1 can be converted into S2 and S3 signals. The model works in the frequency domain. First, the model accounts for the leaf reflection $R_{leaf}$ using leaf and air parameters. Then reverberation is simulated as M2 and M3 and S2 and S3 are:

$$S2_{sim}(\omega) = CAL'(\omega) \cdot M_1\big(\omega, h, v_{leaf}, \alpha, \rho_{leaf}, v_{air}, \rho_{air}\big) \cdot$$

$$\cdot R_{leaf}\big(\omega, h, v_{leaf}, \alpha, \rho_{leaf}, v_{air}, \rho_{air}\big) \cdot M_2(\omega, d, d2, v_{air}, \rho_{air}) \qquad (9)$$

$$S3_{sim}(\omega) = CAL'(\omega) \cdot M_1\big(\omega, h, v_{leaf}, \alpha, \rho_{leaf}, v_{air}, \rho_{air}\big) \cdot$$

$$\cdot R_{leaf}\big(\omega, h, v_{leaf}, \alpha, \rho_{leaf}, v_{air}, \rho_{air}\big) \cdot M_3(\omega, d, d2, v_{air}, \rho_{air}) \qquad (10)$$

**Model for multiple "transducer-transducer"-type reflections.** Transducer-transducer S4 propagation model can be derived from the general US wave propagation theory in layered structures, e.g. **[9]**. The model describes how simulated signal S1 can be converted into S4. The model works in the frequency domain. It accounts for the transducer reflection and propagation as $R_{TT}$:

$$R_{TT}(\omega) = C2(\omega)/C1(\omega) \qquad\qquad (11)$$

Then simulated S4 is:

$$S3_{sim}(\omega) = CAL'(\omega) \cdot M_1\big(\omega, h, v_{leaf}, \alpha, \rho_{leaf}, v_{air}, \rho_{air}\big) \cdot$$
$$\cdot R_{TT}(\omega) \cdot M_4(\omega, d, v_{air}, \rho_{air}) \qquad\qquad (12)$$

**Eliminating non-useful reflections from the measurement signal.** A problem appears to use long probing signals. It is solved by constructing the sample signal iteratively. The first sample signal copy is saved. Then signal S1 is produced from signal C1 by optimizing the M1 model with the help of PSO optimizer (partial solution of the inverse problem). Then signal S1 is subtracted from the sample signal, the remainder is assigned as the sample signal. In such a way, S2 and S3 are better exposed to improve the convergence criteria sensitivity. Then S2+S3 is produced from signal C1 by optimizing the M2 and M3 models with the help of PSO optimizer. Then signals S2 and S3 are subtracted from the sample signal. In such a way, S4 is better exposed to improve the convergence criteria sensitivity. Then S4 is produced from signal C1 by optimizing the M4 model with the help of PSO optimizer. The signals S2, S3, and S4 are subtracted from the original sample signal. In such a way, S1 is now better exposed to improve the convergence criteria sensitivity. The process is repeated until predefined stop criteria are reached. Iterations counting was used in the processing flow diagram (Fig. 11) and serve just as an example of possible stop criteria options.

**Method steps.** The method (Fig.11) for ultrasonic measuring leaf under test (2) comprises at least steps of:

- (3.1) Providing the leaf-under-test model for the US measurement system setup, defined by parameters: leaf thickness, density, propagation velocity, and attenuation; distance between transducers;
- (3.2) Performing system noise and transmission spectrum measurement in calibration mode;
- (3.3) Forming reference APWP SS signal (11)for desired/sufficient SNR based on 3.2 results;
- (3.4) Perform ultrasonic measurements of the leaf, in particular:

  ○ (3.5) Perform an ultrasonic measurement cycle and record the measured US signal without leaf (calibration mode);
  ○ (3.6) Provide a plant leaf under test (2) into the ultrasonic measurement path (5) and measure the leaf-under-test (2);
  ○ (3.7) Transmit the obtained signals via the communication interface (9) for storage and further processing;

- (3.8) Carry out the leaf parameters estimation, in particular:

  ○ (3.9) Estimate US propagation velocity in air and air density from calibration measurement: estimate time of flight (ToF) between signals C1 and C2, calculate US propagation velocity in the air: $v_{air}$=2d/ToF, estimate air temperature T= $v_{air}^2$ /402.0025-273.15, calculate air density $p_{air}$=p/($R_{sp}$ x T), where $R_{sp}$ is the specific gas constant for dry air (287.058 J/kg.K); or use any alternative air density estimation means;
  ○ (3.10) Separate by gating and transform signals C1 and C2 into the frequency domain, calculate US propagation and reflection between transducers model, $R_{TT}$=C2/C1;
  ○ (3.11) Compensate electronics influence from sample signal by passing through compensating filter Fc, $SAM_{exp}$=Fc($SAM_{raw}$); make a copy SAM=$SAM_{exp}$; reset the iteration counter, n=1;
  ○ (3.12) Find inverse problem solution of signal S1 using only leaf propagation model $M_1$(h, $v_{leaf}$, $\alpha$, $\rho_{leaf}$, $v_{air}$, $\rho_{air}$) by using PSO, by optimizing h, $v_{leaf}$, $\alpha$, $\rho_{leaf}$ and using Vair, pair constant
  ○ (3.13) Calculate simulated sample signal S1 by using (3.12) solution results $S1_{sim}$ = C1 x $M_1$(h, $v_{leaf}$, $\alpha$, $\rho_{leaf}$, $v_{air}$, $\rho_{air}$)
  o (3.14) Subtract S1sim from sample signal SAM, assign remainder as SAM: SAM=SAM - $S1_{sim}$
  ○ (3.15) Find inverse problem solution for signal S2 + S3 by using PSO, using leaf propagation model $M_1$(h, $v_{leaf}$, $\alpha$, $\rho_{leaf}$, $v_{air}$, $\rho_{air}$) and reverberation models $M_2$($v_{air}$, pair, d2, d) and $M_3$($v_{air}$, pair, d1, d); Optimizing d1, d2 and using h, $v_{leaf}$, $\alpha$, $\rho_{leaf}$, Vair, pair constant;
  ○ (3.16) Calculate simulated sample signals $S2_{sim}$ + $S3_{sim}$ by using (3.15) solution results: S2sim=C1 $\times$ $M_1$(h, $v_{leaf}$, $\alpha$, $\rho_{leaf}$, Vair, $\rho_{air}$) x $M_2$($v_{air}$, pair, d2, d), $S3_{sim}$=C1 $\times$ $M_1$(h, $v_{leaf}$, $\alpha$, $\rho_{leaf}$, Vair, $\rho_{air}$) x M3(Vair, pair, d1, d)
  o (3.17) Subtract $S2_{sim}$ and $S3_{sim}$ from sample signal SAM, assign remainder as SAM: SAM=SAM - $S2_{sim}$ - $S3_{sim}$
  ○ (3.18) Find inverse problem solution for signal S4 using leaf propagation model $M_1$(h, $v_{leaf}$, $\alpha$, $\rho_{leaf}$, Vair, $\rho_{air}$) and

reverberation model $M_4(v_{air}, pair, R)$; Optimizing parameters $v_{air}$, $\rho_{air}$ and using h, viear, $\alpha$, $\rho_{leaf}$ as constant

○ (3.19) Calculate simulated sample signal $S4_{sim}$ by using (3.19) solution results: $S4_{sim}=C1 \times M_1(h, v_{leaf}, \alpha, \rho_{leaf}, Vair, \rho_{air})$ x M4(Vair, pair, R)

○ (3.20) Subtract $S4_{sim}$ from sample signal SAM, assign remainder as SAM: $SAM=SAM - S4_{sim}$

○ (3.21) Check whether stop criteria have been reached; in this example, spot criteria are simple to count, but not limited to other stop criteria; Exit the loop if stop criteria have been reached, otherwise continue to next steps;

○ (3.22) Subtract the interfering reflections S2, S3, and S4 from the original sample signal copy $SAM_{exp}$, and assign it as SAM, which is used in steps (3.12)-(3.20): $SAM=SAM_{exp} - S2 - S3 - S4$;

o (3.23) increment the loop counter, return to point (3.12);

- (3.24) Estimate the leaf properties from the measured ultrasonic response and model parameters.

**System for implementation of the method.** This method requires substantially increased computational resources, to define and provide APWP SS signals, and to solve the inverse problem functions after the ultrasonic measurement has been done. On the other hand, a practical implementation of the ultrasonic measurement device requires small dimensions (compactness) and efficient use of energy. Preferable and applicable implementations of the method computation-intensive functions are in cloud-based services, and connecting the compact Ultrasonic Measurement Device (UMD) device with said cloud services, preferably, via wireless or mobile, or Bluetooth connection. Furthermore, all relevant reports (for example, the possibility to analyze parameter change over time or geographic distribution/maps) to the UMD user are also provided by corresponding implementations in cloud services.

Ultrasonic transducers, battery, converter from the battery to required voltages (including high-voltage up to 400V), high-voltage generator, reception controlled amplifier, analog-to-digital-converter, buffer memory, microcontroller for process control, and data acquisition, and processing, communication module (Bluetooth) for data transmission and communication are allocated in one housing of the device.

The recorded measurement data is transferred from the sensing device to the smartphone. Geolocation information, photos, labels, and RF tag information is added and transmitted to the cloud. The main processing (inverse problem), data storage, and report generation is realized in the clouds. The user connects to the cloud, on a smartphone or a computer, to read reports in text or graphical format.

A preferred embodiment of the system for estimating plant-leaf ultrasonic response and estimating the physiological parameters of the leaf is presented in Fig.12. The system implements the above-described method, by involving at least the leaf-sensor device (1), and further, for optimizing the practical application of the method, the system includes a portable gateway node, carried by the operator, and a data processing and storage node which is a stationary computing facility, such as a server, cluster of servers, or computational resources in a computer-cloud. In the most preferred system's embodiment, the portable gateway node may be a mobile smart computing device, such as a smartphone, providing a wireless (Bluetooth) connection to the sensing device (1), and adding to the received measurement data geolocation information, photos, labels, RF tag information, and transmitting via a wireless connection (WiFi or mobile) for further processing. The data processing and storage node nowadays are most efficiently implemented by cloud-based services (13).

NON-PATENT LITERATURE

**1.** Álvarez-Arenas et al. Determination of Plant Leaves Water Status using Air-Coupled Ultrasounds, 10.1109 /ULTSYM.2009.0188.

**2.** Fariñas et al. Monitoring plant response to environmental stimuli by ultrasonic sensing of the leaves, Ultrasound Med Biol. 2014 Sep;40(9):2183-94. doi: 10.1016/j.ultrasmedbio.2014.04.004. Epub 2014 Jul 9.

**3.** Fariñas et al. Instantaneous and non-destructive relative water content estimation from deep learning applied to resonant ultrasonic spectra of plant leaves, Plant Methods (2019) 15:128 https://doi.org/10.1186/ s13007-019-0511-z.

**4.** Svilainis et al. Ultrasound Transmission Spectral Compensation Using Arbitrary Position and Width Pulse Sets, IEEE Transactions on Instrumentation and Measurement, March 2018, DOI: 10.1109TTIM.2018.2809838.

**5.** Svilainis et al. Air-Coupled Ultrasound Resonant Spectroscopy Sensitivity Study in Plant Leaf Measurements, 2021 IEEE Sensors | 978-1-7281-9501-8/21/$31.00 ©2021 IEEE | DOI: 10.1109/SENSORS47087.2021.9639612.

**6.** Amoroso et al. Novel Nanocomposite Materials for Improving Passive Layers in Air-coupled Ultrasonic Transducer Applications, IEEE IUS 2019.

**7.** Svilainis et al. Ultrasonic Air Coupled Transducer Output Impedance Measurement Technique. 2019. DOI10.5755/j01.eie.25.1.22731.

**8.** Svilainis et al. Evaluation of the ultrasonic preamplifier noise voltage density. 2014. DOI10.1142/50218126614500078.

**9.** L. M. Brekhovskikh, O. A. Godin, Acoustics of Layered Media I. Plane and Quasi-Plane Waves. Springer-Verlag, 1990.

**Claims**

1. A method for ultrasonic, US, estimation of a plant-leaf (2) response, wherein said response is estimated by measurable changes of a sample US signal transmitted through the leaf (2) placed between a transmitting (3) and receiving (4) US transducers within a surrounding medium, preferably, air,

   wherein said changes in the sample US signal are estimated with respect to a calibration US signal measured without the leaf (2),
   **characterized in that**, the method further involves

   • the transmitted US signal is an arbitrary-position-and-width spread-spectrum, APWP-SS, signal emitted at the transmitting US transducer (3) being excited by a sequence of electric pulses, wherein the number, individual widths, and time-spacing of said sequence of electric pulses are selected for a predefined Signal-to-Noise-Ratio, SNR, spectral shape over the US signal's bandwidth, within which the leaf (2) expresses its resonant responses, and the APWP-SS signal is emitted so long that it overlaps with at least one its reflection from any US transducer (3, 4), in the US signal measured at the receiving transducer (4);
   • an adjustable digital US-signal-propagation-model, involving at least

   o i) the US signal's propagation through the leaf (2) model, comprising one or more layers of leaf-substance, defined by parameters of each layer thickness, density, and US propagation parameters, at least: US propagation velocity and attenuation, and
   o ii) the propagated US signal's reflections from the leaf (2) and/or the US transducers (3, 4), wherein said reflections involve US delays and reverberations due to the leaf-layered-structure and the US transducers (3, 4), and

   • an inverse problem of the leaf (2) response estimation is solved in the time-domain, by adjusting the US-signal-propagation-model's parameters for the best matching to the US measurement signal with the leaf (2), registered at the receiving US transducer (4).

2. The method according to claim 1, **wherein** the US excitation sequence of electric pulses by the number, individual widths, and time-spacing of said pulses is selected such that high SNR is provided for the US signal over a frequency range as broad as possible and the SNR is uniform over the examined frequency range.

3. The method according to claims 1 or 2, **wherein** the spread-spectrum US signal's bandwidth is selected to comprise frequencies, with which the leaf (2) resonant responses are expressed or expected, within the frequency range from 200kHz to 1000kHz.

4. The method according to any claims of 1 to 3, **wherein** the calibration and sample signals are obtained at the different gain of US receiver (4) and the US transmitter (3) excitation voltage, wherein the digital US-signal-propagation-model compensates US transmitter's and receiver's (3, 4) electronic circuits' transfer functions, being different in case of the calibration and sample signals.

5. The method according to claim 1, **wherein** the inverse problem solution - the US-signal-propagation-model is adjusted for the best matching to the registered US measurement signal using any one of optimization algorithms: Particle Swarm Optimization, PSO, Artificial Bee Colony, ABC.

6. The method according to claim 1, **characterized** that parameters of the electrical pulses sequence for exciting the transmitting US transducer (3) are configurable durations of individual electric pulses, time spaces between them, and configurable amplitude of the whole sequence of electric pulses.

7. The method according to claims 1 and 6, **characterized in that** the electric pulses sequence is configured such, that the transmitting US transducer (3) emits Arbitrary Position and Width Pulses Spread Spectrum APWP-SS signals, or frequency-modulated harmonic "chirp" US signals, or digitally coded US sequences.

8. The method according to any claims 1 to 7, **characterized in that** solving the inverse problem with the US-signal-propagation-model involves:

   • C1: US signal propagated from the transmitting transducer (3) to the receiving transducer (4), registered in the calibration mode without leaf (2);
   • C2: a registered secondary reflection of the US signal in the calibration mode without leaf (2), propagated between the US transducers (3, 4) 3 times, and received by the receiving transducer (4);
   • S1: leaf (2) measurement signal, registered by the receiving transducer (4) with the plant-leaf (2) inserted in the insert (6.1);
   • S2: emitted US signal which propagated through the leaf (2), then reflected from then receiving transducer (4), then reflected from the leaf (2) and then received by the receiving transducer (4);
   • S3: emitted US signal which reflected from the leaf (2), then reflected from the transmitting transducer (3), propagated through the leaf (2), and received by the receiving transducer (4);
   • S4: emitted US signal which propagated through the leaf (2), then reflected from receiving transducer (4), propagated through the leaf (2), reflected from the transmitting transducer (3), propagated through the leaf (2), and received by the receiving transducer (4),

   wherein

   • the calibration signals C1 and C2 are used to estimate

      ○ time-of-flight shift of C2 relative to C1, thereby, the US velocity in the air,
      ○ and C2-relative-to-C1-change of the US signal spectral content $R_{TT}$;

   and further
   • an augmented parameter-adjustable US signal propagation model $M_{TOT}$ is composed of the recorded calibration signals C1 and C2, and considering the reflective and through-leaf propagation signals S1, S2, S3, S4,
   and further
   • said model $M_{TOT}$ is used to solve the inverse problem by adjusting the leaf and C2-to-C1 model parameters in $M_{TOT}$, for the best match between the leaf (2) US measurement signal recorded at the receiving transducer (4) and the $M_{TOT}$-simulated S1, S2, S3, S4 signals,

   where the solution is adjusted $M_{TOT}$-model as the estimate of the leaf (2) response.

9. The method according to claim 8, **characterized in that** the electric pulse sequence for emitting the US signal is selected of such length, that in the registered and/or simulated US measurement signal, at least any two of the S1, S2, S3, S4 signals overlap each other.

10. A portable ultrasonic device (1) for estimating plant-leaf (2) response by US signals transmitted through the leaf (2), the device (1) implementing steps of the method according to any of claims 1 to 9, and **comprising** a single housing, a US measurement channel (20) with the US transducers (3, 4), a leaf-insert (6.1) between the US transducers, a battery, a voltage converter, a high-voltage pulse generator (7), a reception-controlled amplifier-receiver (8), an analog-to-digital-converter, a buffer memory, a microcontroller (10) for measurement process control and data acquisition, a communication module (9) for data transmission and communication.

11. The device (1) according to claim 10, **characterized in that** the US measurement channel (20) is a cylinder- or barrel-shaped with the US transducers (3, 4) allocated at its ends, and the leaf-insert (6.1) is allocated between the US transducers (3, 4), preferably, in the middle between them.

**12.** An ultrasonic measurement system for estimating plant-leaf (2) response by US signals transmitted through the leaf (2), the system comprising the device (1) of claims 10-11 and implementing the method of claims 1 to 9.

**13.** The system according to claim 12, **wherein** it comprises:

• the plant-leaf sensor device (1) of claims 10-11;
• a portable gateway node (12), for communication and control of the system, such as mobile smart device or smartphone, providing wireless connection to the sensor device (1), adding to the received measurement data geolocation information, photos, labels, RF tag information, and transmitting said measurement data via a wireless connection for further processing and storage;
• a processing and storage node (13), such as cloud- or server-infrastructure-based services, for digital signal processing of the inverse problem, data storage, and reporting online by web services, in text and/or graphical format.

**Patentansprüche**

**1.** Verfahren zur Ultraschallschätzung, US-Schätzung, einer Reaktion eines Pflanzenblattes (2), wobei die Reaktion geschätzt wird durch messbare Änderungen eines Proben-US-Signals, das durch das Blatt (2), das zwischen einem übertragenden (3) und einem empfangenden (4) US-Wandler innerhalb eines umgebenden Mediums, vorzugsweise Luft, platziert wird, übertragen wird,

wobei die Änderungen in dem Proben-US-Signal in Bezug auf ein Kalibrierungs-US-Signal geschätzt werden, das ohne das Blatt (2) gemessen wird,
**dadurch gekennzeichnet, dass** das Verfahren ferner Folgendes einschließt:

• das übertragene US-Signal ist ein Spreizspektrum-Signal mit beliebiger Position und Breite, APWP-SS-Signal, das an dem übertragenden US-Wandler (3) ausgesendet wird, der durch eine Sequenz von elektrischen Impulsen angeregt wird, wobei die Anzahl, die einzelnen Breiten und der zeitliche Abstand der Sequenz von elektrischen Impulsen ausgewählt sind für eine vordefinierte Signal-Rausch-Verhältnis-Spektralform, SNR-Spektralform, über die Bandbreite des US-Signals, innerhalb derer das Blatt (2) seine Resonanzreaktionen ausdrückt und das APWP-SS-Signal so lange ausgesendet wird, dass es mit mindestens einer seiner Reflexionen von einem beliebigen US-Wandler (3, 4) überlappt, in dem US-Signal, das an dem empfangenden Wandler (4) gemessen wird;
• ein einstellbares digitales US-Signal-Ausbreitungsmodell, das mindestens Folgendes einschließt ∘ i) die Ausbreitung des US-Signals durch das Modell des Blattes (2), das eine oder mehrere Schichten der Blattsubstanz umfasst, definiert durch Parameter wie Dicke, Dichte und US-Ausbreitungsparameter jeder Schicht, mindestens: US-Ausbreitungsgeschwindigkeit und -dämpfung und

∘ ii) die Reflexionen des sich ausbreitenden US-Signals von dem Blatt (2) und/oder den US-Wandlern (3, 4), wobei die Reflexionen US-Verzögerungen und -Nachhall aufgrund der Blatt-Schichtstruktur und der US-Wandler (3, 4) einschließen, und

• ein inverses Problem der Reaktionsschätzung des Blattes (2) wird im Zeitbereich gelöst durch Anpassen der Parameter des US-Signal-Ausbreitungsmodells für die beste Übereinstimmung mit dem US-Messsignal mit dem Blatt (2), das an dem empfangenden US-Wandler (4) registriert wird.

**2.** Verfahren nach Anspruch 1, wobei die US-Anregungssequenz elektrischer Impulse durch die Anzahl, die einzelnen Breiten und den zeitlichen Abstand der Impulse derart ausgewählt wird, dass ein hohes SNR für das US-Signal über einen möglichst breiten Frequenzbereich bereitgestellt wird und das SNR über den untersuchten Frequenzbereich gleichmäßig ist.

**3.** Verfahren nach Anspruch 1 oder 2, wobei die Bandbreite des Spreizspektrum-US-Signals dazu ausgewählt wird, Frequenzen zu umfassen, mit denen die Resonanzreaktionen des Blattes (2) innerhalb des Frequenzbereichs von 200 kHz bis 1000 kHz ausgedrückt oder erwartet werden.

**4.** Verfahren nach einem der Ansprüche 1 bis 3, wobei die Kalibrierungs- und Probensignale mit der unterschiedlichen Verstärkung des US-Empfängers (4) und der Anregungsspannung des US-Senders (3) erhalten werden, wobei das digitale US-Signal-Ausbreitungsmodell die Übertragungsfunktionen der elektronischen Schaltungen des US-Senders und -Empfängers (3, 4) kompensiert, die sich im Fall der Kalibrierungs- und Probensignale unterscheiden.

5. Verfahren nach Anspruch 1, wobei die Lösung des inversen Problems - das US-Signal-Ausbreitungsmodell wird zur besten Übereinstimmung mit dem registrierten US-Messsignal angepasst, unter Verwendung eines beliebigen der folgenden Optimierungsalgorithmen: Partikelschwarmoptimierung, PSO, künstliches Bienenvolk, ABC.

6. Verfahren nach Anspruch 1, **dadurch gekennzeichnet, dass** Parameter der elektrischen Impulssequenz zum Anregen des übertragenden US-Wandlers (3) konfigurierbare Zeitspannen einzelner elektrischer Impulse, Zeitabstände zwischen diesen und konfigurierbare Amplitude der gesamten Sequenz elektrischer Impulse sind.

7. Verfahren nach den Ansprüchen 1 und 6, **dadurch gekennzeichnet, dass** die elektrische Impulssequenz derart konfiguriert ist, dass der übertragende US-Wandler (3) Spreizspektrum-Signale mit beliebigen Positions- und Breitenimpulsen, APWP-SS-Signale, oder frequenzmodulierte harmonische "Chirp"-US-Signale oder digital codierte US-Sequenzen aussendet.

8. Verfahren nach einem der Ansprüche 1 bis 7, **dadurch gekennzeichnet, dass** das Lösen des inversen Problems mit dem US-Signal-Ausbreitungsmodell Folgendes einschließt:

• C1: US-Signal, das sich von dem übertragenden Wandler (3) zu dem empfangenden Wandler (4) ausbreitet, registriert in dem Kalibrierungsmodus ohne Blatt (2);
• C2: eine registrierte Sekundärreflexion des US-Signals im Kalibrierungsmodus ohne Blatt (2), das sich 3 Mal zwischen den US-Wandlern (3, 4) ausbreitet und von dem empfangenden Wandler (4) empfangen wird;
• S1: Messsignal des Blattes (2), das von dem empfangenden Wandler (4) registriert wird, während das Pflanzenblatt (2) in den Einsatz (6.1) eingesetzt ist;
• S2: ausgesendetes US-Signal, das sich durch das Blatt (2) ausbreitet, dann von dem empfangenden Wandler (4) reflektiert wird, dann von dem Blatt (2) reflektiert wird und dann von dem empfangenden Wandler (4) empfangen wird;
• S3: ausgesendetes US-Signal, das von dem Blatt (2) reflektiert wird, dann von dem übertragenden Wandler (3) reflektiert wird, sich durch das Blatt (2) ausbreitet und von dem empfangenden Wandler (4) empfangen wird;
• S4: ausgesendetes US-Signal, das sich durch das Blatt (2) ausbreitet, dann von dem empfangenden Wandler (4) reflektiert wird, sich durch das Blatt (2) ausbreitet, von dem übertragenden Wandler (3) reflektiert wird, sich durch das Blatt (2) ausbreitet und von dem empfangenden Wandler (4) empfangen wird,

wobei

• die Kalibrierungssignale C1 und C2 dazu verwendet werden, Folgendes zu schätzen

∘ eine Laufzeitverschiebung von C2 in Bezug auf C1, dadurch die US-Geschwindigkeit in der Luft,
∘ und eine C2-zu-Cl-Änderung des Spektralinhalts des US-Signals $R_{TT}$;

und ferner
• sich ein erweitertes parameter-einstellbares US-Signal-Ausbreitungsmodell $M_{TOT}$ aus den aufgezeichneten Kalibriersignalen C1 und C2 zusammensetzt und die reflektierten und sich durch das Blatt ausbreitenden Signale S1, S2, S3, S4 berücksichtigt
und ferner
• das Modell $M_{TOT}$ dazu verwendet wird, das inverse Problem durch Anpassen der Blatt- und C2-zu-C1-Modellparameter in $M_{TOT}$ zu lösen, für die beste Übereinstimmung zwischen dem an dem empfangenden Wandler (4) aufgezeichneten US-Messsignal des Blattes (2) und den $M_{TOT}$-simulierten Signalen S1, S2, S3, S4,

wobei die Lösung als die Schätzung der Reaktion des Blattes (2) $M_{TOT}$-Modell angepasst wird.

9. Verfahren nach Anspruch 8, **dadurch gekennzeichnet, dass** die elektrische Impulssequenz zum Aussenden des US-Signals von einer derartigen Länge ausgewählt wird, dass sich in dem registrierten und/oder simulierten US-Messsignal mindestens zwei der Signale S1, S2, S3, S4 überlappen.

10. Tragbare Ultraschallvorrichtung (1) zum Schätzen der Reaktion eines Pflanzenblattes (2) mithilfe von US-Signalen, die durch das Blatt (2) übertragen werden, wobei die Vorrichtung (1) die Schritte des Verfahrens nach einem der Ansprüche 1 bis 9 implementiert und Folgendes umfasst: ein einziges Gehäuse, einen US-Messkanal (20) mit den US-Wandlern (3, 4), einen Blatteinsatz (6.1) zwischen den US-Wandlern, eine Batterie, einen Spannungswandler, einen Hochspannungs-Impulsgenerator (7), einen empfangsgesteuerten Verstärker-Empfänger (8), einen Analog-Digital-Wandler, einen Pufferspeicher, einen Mikrocontroller (10) zur Steuerung des Messvorgangs und zur Datenerfassung, ein Kommunikationsmodul (9) zur Datenübertragung und Kommunikation.

11. Vorrichtung (1) nach Anspruch 10, **dadurch gekennzeichnet, dass** der US-Messkanal (20) zylinder- oder tonnenförmig ist, wobei die US-Wandler (3, 4) an dessen Enden angeordnet sind und der Blatteinsatz (6.1) zwischen den US-Wandlern (3, 4), vorzugsweise in deren Mitte, angeordnet ist.

12. Ultraschall-Messsystem zum Schätzen einer Reaktion eines Pflanzenblattes (2) mithilfe von US-Signalen, die durch das Blatt (2) übertragen werden, wobei das System die Vorrichtung (1) nach den Ansprüchen 10-11 umfasst und das Verfahren nach den Ansprüchen 1 bis 9 implementiert.

13. System nach Anspruch 12, wobei es Folgendes umfasst:

   • die Pflanzenblatt-Sensorvorrichtung (1) nach den Ansprüchen 10-11;
   • einen tragbarer Gateway-Knoten (12) zur Kommunikation und Steuerung des Systems, wie zum Beispiel ein mobiles Smart-Gerät oder Smartphone, der eine drahtlose Verbindung zur Sensorvorrichtung (1) bereitstellt, den empfangenen Messdaten Geolokalisierungsinformationen, Fotos, Etiketten und RF-Tag-Informationen hinzufügt und die Messdaten über eine drahtlose Verbindung zur weiteren Verarbeitung und Speicherung überträgt;
   • einen Verarbeitungs- und Speicherknoten (13), wie beispielsweise Cloud-Dienste oder Dienste auf Serverinfrastrukturbasis, zur digitalen Signalverarbeitung des inversen Problems, Datenspeicherung und Online-Berichterstellung mittels Webdiensten in Text- und/oder grafischer Form.

**Revendications**

1. Procédé d'estimation ultrasonore, US, d'une réponse de feuille de plante (2), dans lequel ladite réponse est estimée par des variations mesurables d'un signal US échantillon transmis à travers la feuille (2) placée entre des transducteurs US émetteurs (3) et récepteurs (4) dans un milieu environnant, de préférence l'air,

   dans lequel lesdits changements dans le signal US de l'échantillon sont estimés par rapport à un signal US d'étalonnage mesuré sans la feuille (2),
   **caractérisé en ce que** le procédé implique en outre

   • le signal US transmis est un signal à spectre étalé de position et de largeur arbitraires, APWP-SS, émis au niveau du transducteur US émetteur (3) excité par une séquence d'impulsions électriques, dans lequel le nombre, les largeurs individuelles et l'espacement temporel de ladite séquence d'impulsions électriques sont sélectionnés pour une forme spectrale de rapport signal sur bruit, SNR, prédéfinie, sur la bande passante du signal US, dans laquelle la feuille (2) exprime ses réponses résonnantes, et le signal APWP-SS est émis si longtemps qu'il chevauche au moins une ses réflexions à partir de n'importe quel transducteur US (3, 4), dans le signal US mesuré au niveau du transducteur récepteur (4) ;
   • un modèle de propagation de signal numérique US ajustable, impliquant au moins

      ∘ i) la propagation du signal US à travers le modèle de feuille (2), comprenant une ou plusieurs couches de substance foliaire, définies par des paramètres d'épaisseur, de densité et de propagation US de chaque couche, au moins : la vitesse de propagation et l'atténuation US, et
      ∘ ii) les réflexions du signal US propagé par la feuille (2) et/ou les transducteurs US (3, 4), lesdites réflexions impliquant des retards et des réverbérations US dus à la structure en couches de la feuille et aux transducteurs US (3, 4), et

   • un problème inverse de l'estimation de la réponse de la feuille (2) est résolu dans le domaine temporel, en ajustant les paramètres du modèle de propagation du signal US pour la meilleure correspondance avec le signal de mesure US avec la feuille (2), enregistré au niveau du transducteur US récepteur (4).

2. Procédé selon la revendication 1, dans lequel la séquence d'excitation US d'impulsions électriques par le nombre, les largeurs individuelles et l'espacement temporel desdites impulsions est sélectionnée de telle sorte qu'un SNR élevé soit fourni pour le signal US sur une plage de fréquences aussi large que possible et le SNR est uniforme sur la plage de fréquences examinée.

3. Procédé selon les revendications 1 ou 2, dans lequel la bande passante du signal US à spectre étalé est sélectionnée pour comprendre des fréquences avec lesquelles les réponses résonantes de la feuille (2) sont exprimées ou attendues, dans la plage de fréquences de 200 kHz à 1000 kHz.

4. Procédé selon l'une quelconque des revendications 1 à 3, dans lequel les signaux d'étalonnage et d'échantillonnage sont obtenus à un gain différent du récepteur US (4) et de la tension d'excitation de l'émetteur US (3), dans lequel le modèle de propagation du signal US numérique compense les fonctions de transfert des circuits électroniques de l'émetteur US et du récepteur (3, 4), qui sont différentes dans le cas des signaux d'étalonnage et d'échantillonnage.

5. Procédé selon la revendication 1, dans lequel la solution de problème inverse - le modèle de propagation du signal US - est ajustée pour la meilleure correspondance avec le signal de mesure US enregistré en utilisant l'un quelconque des algorithmes d'optimisation suivants : l'optimisation par colonie d'abeilles artificielles, ABC, d'essaim de particules, PSO.

6. Procédé selon la revendication 1, **caractérisé en ce que** les paramètres de la séquence d'impulsions électriques pour exciter le transducteur US émetteur (3) sont des durées configurables d'impulsions électriques individuelles, des espaces de temps entre elles et une amplitude configurable de la séquence entière d'impulsions électriques.

7. Procédé selon les revendications 1 et 6, **caractérisé en ce que** la séquence d'impulsions électriques est configurée de telle sorte que le transducteur US émetteur (3) émet des signaux APWP-SS à spectre étalé d'impulsions à position et largeur arbitraires, ou des signaux US « chirp » harmoniques modulés en fréquence, ou des séquences US codées numériquement.

8. Procédé selon l'une quelconque des revendications 1 à 7, **caractérisé en ce que** la résolution du problème inverse avec le modèle de propagation du signal US implique :

   • C1: un signal US propagé du transducteur émetteur (3) au transducteur récepteur (4), enregistré en mode d'étalonnage sans feuille (2) ;
   • C2 : une réflexion secondaire enregistrée du signal US dans le mode d'étalonnage sans feuille (2), propagée entre les transducteurs US (3, 4) 3 fois, et reçue par le transducteur récepteur (4) ;
   • S1 : un signal de mesure de la feuille (2), enregistré par le transducteur de réception (4) avec la feuille de plante (2) insérée dans l'insert (6.1) ;
   • S2 : un signal US émis qui s'est propagé à travers la feuille (2), puis réfléchi par le transducteur de réception (4), puis réfléchi par la feuille (2) puis reçu par le transducteur de réception (4) ;
   • S3 : un signal US émis qui est réfléchi par la feuille (2), puis réfléchi par le transducteur émetteur (3), propagé à travers la feuille (2) et reçu par le transducteur récepteur (4) ;
   • S4 : un signal US émis qui s'est propagé à travers la feuille (2), puis réfléchi par le transducteur de réception (4), propagé à travers la feuille (2), réfléchi par le transducteur d'émission (3), propagé à travers la feuille (2), et reçu par le transducteur de réception (4),
   dans lequel
   • les signaux d'étalonnage C1 et C2 sont utilisés pour estimer

      ◦ le décalage du temps de vol de C2 par rapport à C1, donc de la vitesse US dans l'air,
      ◦ et changement du contenu spectral du signal US $R_{TT}$ de C2 par rapport à C1 ;
      et en outre

   • un modèle de propagation de signal US à paramètres réglables augmentés $M_{TOT}$ est composé des signaux d'étalonnage enregistrés C1 et C2, et considérant les signaux de propagation réfléchissants et à travers les feuilles S1, S2, S3, S4,
   et en outre
   • ledit modèle $M_{TOT}$ est utilisé pour résoudre le problème inverse en ajustant les paramètres du modèle de feuille et C2 à C1 dans $M_{TOT}$ pour la meilleure correspondance entre le signal de mesure US de la feuille (2) enregistré au niveau du transducteur de réception (4) et les signaux S1, S2, S3, S4 simulés par $M_{TOT}$, dans lequel la solution est le modèle $M_{TOT}$ ajusté comme l'estimation de la réponse de la feuille (2).

**9.** Procédé selon la revendication 8, **caractérisé en ce que** la séquence d'impulsions électriques pour émettre le signal US est sélectionnée d'une longueur telle que, dans le signal de mesure US enregistré et/ou simulé, au moins deux signaux parmi S1, S2, S3, S4 se chevauchent.

**10.** Dispositif ultrasonore portable (1) pour estimer la réponse d'une feuille de plante (2) par des signaux US transmis à travers la feuille (2), le dispositif (1) mettant en œuvre les étapes du procédé selon l'une quelconque des revendications 1 à 9, et comprenant un boîtier unique, un canal de mesure US (20) avec les transducteurs US (3, 4), un insert de feuille (6.1) entre les transducteurs US, une batterie, un convertisseur de tension, un générateur d'impulsions haute tension (7), un amplificateur-récepteur commandé par réception (8), un convertisseur analogique-numérique, une mémoire tampon, un microcontrôleur (10) pour le contrôle du processus de mesure et l'acquisition de données, un module de communication (9) pour la transmission et la communication de données.

**11.** Dispositif (1) selon la revendication 10, **caractérisé en ce que** le canal de mesure US (20) est en forme de cylindre ou de tonneau, les transducteurs US (3, 4) étant disposés à ses extrémités, et l'insert en forme de feuille (6.1) est disposé entre les transducteurs US (3, 4), de préférence au milieu entre eux.

**12.** Système de mesure ultrasonore pour estimer la réponse d'une feuille de plante (2) par des signaux US transmis à travers la feuille (2), le système comprenant le dispositif (1) des revendications 10 à 11 et mettant en œuvre le procédé des revendications 1 à 9.

**13.** Système selon la revendication 12, dans lequel il comprend :

• le dispositif de capteur de feuille de plante (1) selon les revendications 10 à 11 ;
• un nœud de passerelle portable (12), pour la communication et la commande du système, tel qu'un appareil intelligent mobile ou un smartphone, fournissant une connexion sans fil au dispositif de capteur (1), ajoutant aux données de mesure reçues des informations de géolocalisation, des photos, des étiquettes, des informations d'étiquette RF, et transmettant lesdites données de mesure via une connexion sans fil pour un traitement et un stockage ultérieurs ;
• un nœud de traitement et de stockage (13), tel que des services basés sur une infrastructure cloud ou serveur, pour le traitement du signal numérique du problème inverse, le stockage des données et le rapport en ligne par des services Web, au format texte et/ou graphique.

a)

Transmitting transducer    Receiving transducer        Transmitting transducer    Reverberation inside leaf    Receiving transducer

Calibration measurement                                 Leaf

                                                         Sample measurement

b)

c)

**Fig. 1**

a)

b)

c)

Fig. 2

d)

e)

f)

Fig. 2

**Fig. 3**

**Fig. 4**

**Fig. 5**

Fig. 6

Fig. 7

Fig. 8

**Fig. 9**

**This invention:**
Barrel-shaped
US measurement channel

**Prior art:**
U-shaped
US measurement channel

latteral view

top view

**Fig. 10**

3.1 — Providing the leaf-under-test model for the US measurement system setup, defined by parameters: thickness, density, stiffness and position between transducers

Noise spectrum is measured. Transmission spectrum is measured in calibration mode — 3.2

3.3 — Based on measurements above forming reference APWP SS signal (11) for desired/sufficient SNR

3.4 — Performing measurement of the leaf — 3.5

Perform an US measurement cycle of the signal $cal_{raw}$ in calibration mode (without leaf)

— 3.6

Perform an US measurement cycle of the signal $sam_{raw}$ in sample mode (with leaf inserted)

— 3.7

Store measurement data and transmit to processing device

3.8 — Leaf parameters estimation

Estimate US propagation velocity in air and air density from calibration measurement
estimate time of flight (ToF) between signals C1 and C2
calculate US propagation velocity in air: $v_{air}=2d/ToF$
estimate air temperature $T=v_{air}^2/402.0025-273.15$
calculate air density $\rho_{air}=p/(R_{sp} \times T)$

— 3.9

Separate and transform signals C1 and C2 into frequency domain, calculate US propagation and reflection between transducers model
$R_{TT}=C2/C1$

— 3.10

Compensate electronics influence from sample signal by passing through compensating filter $F_c$, make a copy
$SAM_{exp}=F_c(SAM_{raw})$
$SAM=SAM_{exp}, n=1$

— 3.11

(A)

**Fig. 11**

Fig. 11

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ÁLVAREZ-ARENAS et al.** *Determination of Plant Leaves Water Status using Air-Coupled Ultrasounds*
- **FARIÑAS et al.** Monitoring plant response to environmental stimuli by ultrasonic sensing of the leaves. *Ultrasound Med Biol.*, 09 July 2014, vol. 40 (9), 2183-94
- **FARIÑAS et al.** Instantaneous and non-destructive relative water content estimation from deep learning applied to resonant ultrasonic spectra of plant leaves. *Plant Methods*, 2019, vol. 15, 128, https://doi.org/10.1186/s13007-019-0511-z
- **D. SANCHO-KNAPIK**. Air-coupled ultrasonic resonant spectroscopy for the study of the relationship between plant leaves' elasticity and their water content. *IEEE Transactions on Ultrasonics, Ferroelectrics, and Frequency Control*, February 2012, vol. 59 (2)
- Air-coupled ultrasound spectroscopy and its potential application in agro-industry. **COLLAZOS-BURBANO et al.** 2014 XIX Symposium on Image, Signal Processing and Artificial Vision. IEEE, 17 September 2014
- **T GÓMEZ ÁLVAREZ-ARENAS**. Ultrasonic Sensing of Plant Water Needs for Agriculture. *Sensors*, 2016, vol. 16 (7), 1089, https://doi.ora/10.3390/s16071089

- Resource Tradeoff Analysis of Plant Physiological Status Sensor with Cloud Connectivity. **L.SVILAINIS**. 2021 11th IEEE International Conference on Intelligent Data Acquisition and Advanced Computing Systems: Technology and Applications (IDAACS). IEEE, 22 September 2021
- **SVILAINIS et al.** Ultrasound Transmission Spectral Compensation Using Arbitrary Position and Width Pulse Sets. *IEEE Transactions on Instrumentation and Measurement*, March 2018
- **SVILAINIS et al.** Air-Coupled Ultrasound Resonant Spectroscopy Sensitivity Study in Plant Leaf Measurements. *2021 IEEE Sensors*
- **AMOROSO et al.** Novel Nanocomposite Materials for Improving Passive Layers in Air-coupled Ultrasonic Transducer Applications. *IEEE IUS*, 2019
- **SVILAINIS et al.** *Ultrasonic Air Coupled Transducer Output Impedance Measurement Technique*, 2019
- **SVILAINIS et al.** *Evaluation of the ultrasonic preamplifier noise voltage density.*, 2014
- **L. M. BREKHOVSKIKH** ; **O. A. GODIN**. Acoustics of Layered Media I. Plane and Quasi-Plane Waves. Springer-Verlag, 1990